# EUROPEAN PATENT SPECIFICATION

(11) **EP 4 431 992 B1**
(45) Date of publication and mention of the grant of the patent: **21.01.2026**
(21) Application number: 23861785.6
(22) Date of filing: 30.01.2023
(51) Int. Cl.: G02B 6/44

(54) **FLEXIBLE OPTICAL FIBER RIBBON AND RIBBON OPTICAL FIBER CABLE**
FLEXIBLES GLASFASERBAND UND GLASFASERBANDKABEL
RUBAN DE FIBRE OPTIQUE FLEXIBLE ET CÂBLE À FIBRE OPTIQUE EN RUBAN

(30) Priority: 06.09.2022 CN 202211085562
(43) Date of publication of application: 18.09.2024
(73) Proprietor: Jiangsu Zhongtian Technology Co., Ltd., Nantong, Jiangsu 226000 (CN); ZTT Morocco Co., Ltd., Commune Jouamaa, Fahs-Anjra 90000 (MA)
(72) Inventor: MIAO, Weiwei, Nantong, Jiangsu 226000 (CN); ZHOU, Hua, Nantong, Jiangsu 226000 (CN); TAN, Feng, Nantong, Jiangsu 226000 (CN); MIAO, Xiaoming, Nantong, Jiangsu 226000 (CN); SHEN, Liuliu, Nantong, Jiangsu 226000 (CN); QIAN, Huihui, Nantong, Jiangsu 226000 (CN); MIAO, Bin, Nantong, Jiangsu 226000 (CN); CAI, Jie, Nantong, Jiangsu 226000 (CN); MIAO, Fenyan, Nantong, Jiangsu 226000 (CN)
(74) Representative: J A Kemp LLP
(86) International application number: PCT/CN2023/073751
(87) International publication number: WO 2024/051073

(56) References cited:
- WO-A1-2022/009798
- CN-A- 110 989 115
- CN-A- 115 144 956
- CN-A- 115 144 957
- JP-A- 2012 234 122
- JP-A- 2016 133 606
- US-A1- 2019 250 347

## Description

### TECHNICAL FIELD

The present disclosure relates to the technical field of optical cables, and in particular, to a flexible optical fiber ribbon and ribbon optical cable.

### BACKGROUND

With development of electronic information technology and increasing demand for communication, optical fiber provides advantages over conventional communication lines. Compared with traditional wired networks, an optical fiber communication networks can transmit significantly increased information at a significantly increased speed. An amount of data transmitted through optical cables continues to grow around the world. This is especially true in data centers due to an expansion of cloud computing, which requires data to be received and transmitted in a limited physical space. Therefore, a demand for optical cables with high number of fiber and high density of fiber is growing. With an increasing demand for high number of fiber, optical fiber ribbon with a function of being coiled comes into being. The so-called optical fiber ribbon with the function of being coiled means that after a plurality of optical fibers arranged in parallel adjacent to each other along a longitudinal direction, a curable adhesive is sprayed by a nozzle on an upper surface formed by a longitudinal arrangement of the plurality of optical fibers, a flexible optical fiber ribbon is formed after the adhesive is cured, and thus the optical fiber ribbon may be coiled or folded in a width direction thereof.

However, although flexibility and robustness of the optical fiber ribbon are determined by a trajectory and amount of the adhesive, flexibility and robustness are two contradictory indicators. If the trajectory of the adhesive is set improperly, it will not only increase requirements for working accuracy of the nozzle, but also may excessively increase the robustness of the optical fiber ribbon and reduce the flexibility. In addition, although it is proposed to provide the adhesive on both sides of an existing flexible optical fiber ribbon, the trajectory of the adhesive is simple, and excessively increases the robustness of the optical fiber ribbon and loses the flexibility of the optical fiber ribbon.

JP 2012 234122 A discloses an optical fiber ribbon in which adhesive is provided on both of its sides.

### SUMMARY

In order to solve the problem existing in the prior art, the present invention provides a flexible optical fiber ribbon and a ribbon optical cable. The flexible optical fiber ribbon of the present application not only has a good stability, but also has improved flexibility.

In a first aspect, an embodiment of the present application provides a flexible optical fiber ribbon, including an optical fiber arrangement formed by a plurality of optical fibers arranged in parallel adjacent to each other in a same plane; and connecting parts are provided at an interval along a length direction of the optical fiber arrangement on a front arrangement surface and a back arrangement surface of the optical fiber arrangement, respectively, the connecting parts are straight shapes, and the connecting parts are inclined to each other to form an angle, and the connecting parts of the front arrangement surface and/or the back arrangement surface are distributed at uneven intervals; materials of the connecting parts are a resin, and a viscosity of the resin of the front surface connecting part (i.e., the connecting part on the front arrangement surface) is higher than a viscosity of the resin of the back surface connecting part (i.e., the connecting part on the back arrangement surface), and a tensile strength of the resin of the front surface connecting part is higher than a tensile strength of the resin of the back surface connecting part.

In some embodiments, a density of the front surface connecting part is greater than a density of the back surface connecting part.

In some embodiments, the connecting parts of the front arrangement surface and/or the back arrangement surface include a short connecting part and a long connecting part.

In some embodiments, the short connecting part is arranged at edges of the optical fiber arrangement surfaces, and the long connecting part is arranged across and bonding the optical fiber arrangement.

In some embodiments, trajectories of the front surface connecting part and the back surface connecting part are arranged periodically, and have the same arrangement period.

In some embodiments, a long connecting part array and a short connecting part array are included in a trajectory period of the connecting part, the long connecting part array includes at least one long connecting part, and the short connecting part array includes at least one short connecting part; in one trajectory period, the short connecting part array of at least one of the front arrangement surface and the back arrangement surface is arranged on both sides of the long connecting part array along the length direction of the optical fiber arrangement, the short connecting part array is alternately distributed at an upper-side edge of the optical fiber arrangement and at a lower-side edge of the optical fiber arrangement; in one trajectory period, the connecting parts on the same arrangement surface are arranged in parallel, and the connecting parts of the front arrangement surface and the back arrangement surface are inclined in opposite directions.

In some embodiments, an arrangement density of the short connecting part on the front arrangement surface and/or the back arrangement surface is greater than an arrangement density of the long connecting part.

In a second aspect, an embodiment of the present application provides a flexible optical fiber ribbon, including an optical fiber arrangement formed by a plurality of optical fibers arranged in parallel adjacent to each other in a same plane; and connecting parts are arranged at an interval along a length direction of the optical fiber arrangement on a front arrangement surface and a back arrangement surface of the optical fiber arrangement, respectively; the connecting parts are inclined straight shapes; materials of the connecting parts are a resin, a viscosity of the resin of the front surface connecting part is higher than a viscosity of the resin of the back surface connecting part, and a tensile strength of the resin of the front surface connecting part is higher than a tensile strength of the resin of the back surface connecting part; the connecting parts of the front arrangement surface and/or the back arrangement surface include a short connecting part array and a long connecting part array, the short connecting part array and the long connecting part array on at least one of the front arrangement surface and the back arrangement surface are alternately arranged along the length direction of the optical fiber arrangement.

In some embodiments, the long connecting part array includes at least one long connecting part arranged across and bonding the optical fiber arrangement, and the short connecting part array includes at least one short connecting part arranged only at an edge of surface of the optical fiber arrangement.

In some embodiments, trajectories of the short connecting part array and the long surface connecting part array are arranged periodically, and have the same arrangement period, the connecting parts on the same arrangement surface are arranged in parallel in one trajectory period, and the connecting parts of the front arrangement surface and the back arrangement surface are inclined in opposite directions.

In a third aspect, an embodiment of the present application provides a ribbon optical cable including an optical fiber bundle unit, a sponge wrapping band, a loose bushing and an outer sheath, which are arranged sequentially from inside to outside, where the optical fiber bundle unit includes a plurality of optical fiber bundles in stranded form and a color wire wrapped around the plurality of optical fiber bundles in stranded form, the optical fiber bundles include the flexible optical fiber ribbon arranged in a coiled form, as described in any one of the above embodiments; spaces between the optical fiber bundle unit and the sponge wrapping band and between the optical fiber bundle units are filled with a water-blocking yarn; the optical fiber bundle unit and the water-blocking yarn are longitudinally wrapped by the sponge wrapping band; and a plurality of reinforcement members are symmetrically embedded in a wall of the outer sheath.

Compared with the prior art, the present application can achieve the following beneficial effects:
1. In the flexible optical fiber ribbon provided in the present application, resin materials of the front surface connecting part and the back surface connecting part have different tensile strengths and viscosities, where a viscosity of resin of the front surface connecting part is higher than a viscosity of resin of the back surface connecting part, a tensile strength of resin of the front surface connecting part is higher than a tensile strength of resin of the back surface connecting part. When the optical fiber ribbon is coiled or folded to the back, the front surface connecting part has a higher tensile degree to ensure that the optical fiber ribbon is coiled or folded into a predetermined shape, while the connecting part will not fall off due to excessive tension.
2. The density of the connecting part arranged at the edge of the optical fiber arrangement is greater than the density of the connecting part arranged in the middle of the optical fiber arrangement. This design can enhance a bonding force to an edge optical fiber (i.e., optical fiber at an edge of the optical fiber arrangement) enabling that the stability of the edge optical fiber is higher than that of a middle optical fiber (i.e., optical fiber at a middle of the optical fiber arrangement) and the looseness of the edge optical fiber can be effectively prevented when the optical fiber ribbon is coiled or folded to the back.
3. The number of the front surface connecting part is more than that of the back surface connecting part, which is more favorable for the optical fiber ribbon to be coiled or folded to the back, and strengthens the bonding force to the middle optical fiber on the front arrangement surface, improving the stability of the flexible optical fiber ribbon.

In order to make the above purposes, features and advantages of the present application more obvious and easy to be understood, preferred embodiments are given below and are described in detail below with reference to the accompanying drawings.

### BRIEF DESCRIPTION OF DRAWINGS

In order to illustrate the technical solutions of embodiments of the present application more clearly, the accompanying drawings that need to be used in the embodiments will be briefly introduced hereunder. It should be understood that the accompanying drawings described below only show some embodiments of the present application, and should not be regarded as a limitation of scope, and for those skilled in the art, other relevant accompanying drawings also can be obtained according to these accompanying drawings without any creative work.
FIG. 1 is a first schematic structural diagram of a flexible optical fiber ribbon of the present application.
FIG. 2a is a second schematic structural diagram of a flexible optical fiber ribbon of the present application.
FIG. 2b is a third schematic structural diagram of a flexible optical fiber ribbon of the present application.
FIG. 2c is a fourth schematic structural diagram of a flexible optical fiber ribbon of the present application.
FIG. 3a is a fifth schematic structural diagram of a flexible optical fiber ribbon of the present application.
FIG. 3b is a sixth schematic structural diagram of a flexible optical fiber ribbon of the present application.
FIG. 3c is a seventh schematic structural diagram of a flexible optical fiber ribbon of the present application.
FIG. 4 is a schematic structural diagram of a ribbon optical cable of the present application.

In order to enable those skilled in the art to understand and implement the present application more accurately and clearly, the following is a further explanation of reference signs combining with the drawings accompanying the specification, where: 10- flexible optical fiber ribbon, 11- optical fiber, 12- front surface long connecting part, 13- front surface short connecting part, 14- back surface long connecting part, 15- back surface short connecting part, 20- optical fiber bundle unit, 21- color wire, 30- water-blocking yarn, 40- sponge wrapping band, 50- loose bushing, 60- outer sheath, 70- reinforcement member, A- front arrangement surface, B- back arrangement surface, C- upper-side edge, D- lower-side edge, T- one trajectory period.

### DESCRIPTION OF EMBODIMENTS

The terms "comprising" and "including", "containing" or "wherein" in the specification, claims of the present application and the accompanying drawings are synonymous, and are including endpoints or are open-ended, and do not exclude additional undescribed elements or method steps. "Comprising" is a technical term used in the language of claims, meaning that an element described exists, but other elements can also be added and still form a construction or a method within the scope of the claims.

It should be noted that similar signs and letters represent similar items in the accompanying drawings below, and thus once an item is defined in an accompanying drawing, it does not need to be further defined and explained in subsequent accompanying drawings. In addition, the terms "first", "second", "third" and others are used only to distinguish descriptions and cannot be understood to indicate or imply relative importance. The technical solutions in the embodiments of the present application will be described clearly and completely below in combination with the accompanying drawings. It is obvious that the embodiments described are some embodiments of the present application, not all embodiments. Based on the embodiments in the present application, all other embodiments obtained by those skilled in the art without creative work fall within the protection scope of the present application.

The reference to "embodiments" herein means that specific features, structures or features described in combination with embodiments may be included in at least one embodiment of the present application. The occurrence of a phrase at various locations in the specification does not necessarily refer to the same embodiment or a separate or alternative embodiment that is mutually exclusive with other embodiments. It is explicitly and implicitly understood by those skilled in the art that the embodiments described herein may be combined with other embodiments.

The present invention will be described in detail in combination with the accompanying drawings and specific embodiments.

### Embodiment 1

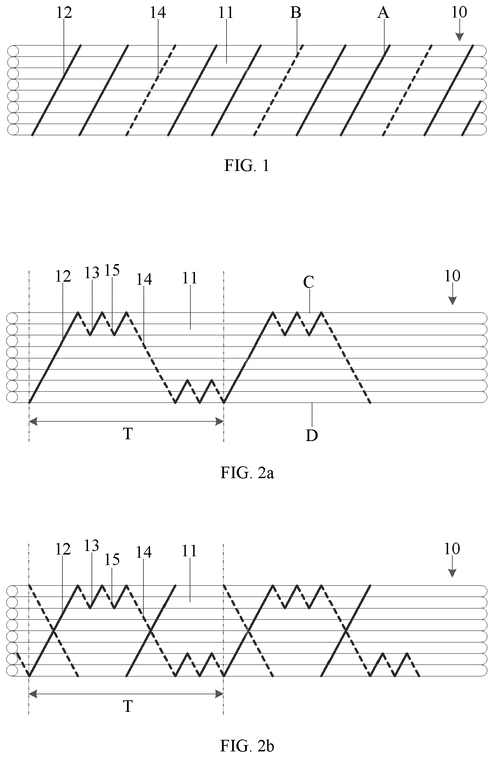

As shown in FIG. 1, the flexible optical fiber ribbon of the present embodiment includes a plurality of optical fibers 11 arranged in parallel adjacent to each other in a same plane to form an optical fiber arrangement, where different optical fibers in the optical fiber arrangement can be set in different colors. Front surface long connecting parts (i.e., long connecting parts on the front arrangement surface) 12 are arranged at an interval in a longitudinal direction of a front arrangement surface A of the optical fiber arrangement, and back surface long connecting parts (long connecting parts on the back arrangement surface) 14 are arranged at an interval in a longitudinal direction of a back arrangement surface B. As shown in FIG. 1, solid lines represent the front surface long connecting parts 12 of the front arrangement surface, and dotted lines represent the back surface long connecting parts 14 of the back arrangement surface. The front surface long connecting parts 12 and the back surface long connecting parts 14 are in straight line shapes with a certain inclined angle and are unevenly distributed on the optical fiber arrangement. In the present embodiment, the front surface long connecting parts 12 and the back surface long connecting parts 14 have the same lengths, inclined angles and inclined directions, and at the inclined angles, a distance between optical fiber welds on a same connecting part is 10-15mm. A distribution density of the front surface long connecting parts 12 is different from that of the back surface long connecting parts 14, and the density of the front surface long connecting parts 12 is higher than that the back surface long connecting parts 14, that is, the number of the front surface long connecting parts 12 are more than the number of the back surface long connecting parts 14. When the optical fiber ribbon is coiled or folded to the back, the optical fiber ribbon is more easily to be coiled to the back due to fewer back surface long connecting parts 14, and the optical fiber ribbon can achieve optimal flexibility.

At the same time, in order to ensure that a bonding point of the optical fiber ribbon does not fall off during the process of coiling to result in optical fiber scattering, a front surface connecting part (i.e., connecting part on the front arrangement surface) and a back surface connecting part (i.e., connecting part on the back arrangement surface) use different resin materials in tensile strength and viscosity. The viscosity of resin of the front surface connecting part is higher than the viscosity of resin of the back surface connecting part, and the tensile strength of resin of the front surface connecting part is higher than the tensile strength of resin of the back surface connecting part.

In some embodiments, the viscosity of resin of the front surface is 100-2000cps higher than the viscosity of the resin of the back surface, and a tensile degree of resin of the front surface is 5-20Mpa higher than a tensile degree of the resin of the back surface. Preferably, the viscosity of resin of the front surface connecting part is 5500-6500cps and the tensile strength is 35-45MPa at 25 °C, and the viscosity of resin of the back surface connecting part is 4500-5500cps and the tensile strength is 25-35MPa at 25 °C. When the optical fiber ribbon is coiled or folded to the back, the front surface long connecting part 12 has a higher tensile degree to ensure that the optical fiber ribbon is coiled or folded into a predetermined shape, and the connecting parts will not fall off due to excessive tension.

### Embodiment 2

The difference of the structure of the flexible optical fiber ribbon of the present embodiment from the Embodiment 1 is that trajectories of the connecting parts are different, and the density of the short connecting part arranged at edge of the optical fiber arrangement is greater than that of the long connecting part arranged across the optical fibers.

The flexible optical fiber ribbon of the present embodiment includes a plurality of optical fibers 11 arranged in parallel in a same plane to form an optical fiber arrangement, and a front surface long connecting part 12 and a front surface short connecting part (i.e., short connecting part on the front arrangement surface) 13 are arranged at an interval in the longitudinal direction of the front arrangement surface of the optical fiber arrangement, and a back surface long connecting part 14 and a back surface short connecting part (short connecting part on the back arrangement surface) 15 are arranged at an interval in the longitudinal direction of the back arrangement surface of the optical fiber arrangement. The connecting parts are in a straight line shape with a certain inclined angle and are unevenly distributed on the optical fiber arrangement. In the present embodiment, the connecting parts have different lengths, and have a long connecting part and a short connecting part, the long connecting part is bonded to the whole optical fiber arrangement, and the short connecting part is bonded to an edge optical fiber of the optical fiber arrangement. The density of the short connecting part is greater than that of the long connecting part, that is, the number of the connecting part bonding to the edge optical fiber is more than that of the connecting part bonding to a middle optical fiber.

In the present embodiment, as shown in FIG. 2a, during a trajectory period T of one of the connecting parts, the front arrangement surface of the optical fiber arrangement is provided with one front surface long connecting part 12 and four front surface short connecting parts 13, where two front surface short connecting parts 13 are arranged at an upper-side edge C of the optical fiber arrangement, and the other two front surface short connecting parts 13 are arranged at a lower-side edge D of the optical fiber arrangement, and the front surface long connecting parts 12 and the front surface short connecting parts 13 are arranged in parallel. The back arrangement surface of the optical fiber arrangement is provided with one back surface long connecting part 14 and four back surface short connecting parts 15, where two back surface short connecting parts 15 are arranged at the upper-side edge of the optical fiber arrangement, the other two back surface short connecting parts 15 are arranged at the lower-side edge of the optical fiber arrangement, and the back surface long connecting part 14 and the back surface short connecting parts 15 are arranged in parallel. When the front surface connecting part and the back surface connecting part are projected in the same plane, the front surface long connecting part 12 and the back surface long connecting part 14 are set to be axially symmetric, and the front surface short connecting part 13 and the back surface short connecting part 15 on the same side of the optical fiber arrangement are set to be axially symmetric, and the front surface connecting part and the back surface connecting part meet head to tail at the edge of the optical fiber arrangement to form a plurality of V-shapes. This design can enhance the bonding force to the edge optical fiber, so that the stability of the edge optical fiber is higher than that of the middle optical fiber, and thus the looseness of the edge optical fiber can be effectively prevented when the optical fiber ribbon is coiled or folded to the back.

In some embodiments, as shown in FIG. 2b, during a trajectory period of one of the connecting parts, the front arrangement surface of the optical fiber arrangement is provided with two front surface long connecting parts 12 and four front surface short connecting parts 13, where two front surface short connecting parts 13 are arranged at the upper-side edge of the optical fiber arrangement, and the other two front surface short connecting parts 13 are arranged at the lower-side edge of the optical fiber arrangement, and the front surface long connecting part 12 and the front surface short connecting part 13 are arranged in parallel. The back arrangement surface of the optical fiber arrangement is provided with two back surface long connecting parts 14 and four back surface short connecting parts 15, where two back surface short connecting parts 15 are arranged at the upper-side edge of the optical fiber arrangement, the other two back surface short connecting parts 15 are arranged at the lower-side edge of the optical fiber arrangement, and the back surface long connecting parts 14 and the back surface short connecting parts 15 are arranged in parallel. When the front surface connecting part and the back surface connecting part are projected in the same plane, the front surface long connecting part 12 and the back surface long connecting part 14 are set to be axially symmetric, and the front surface short connecting part 13 and the back surface short connecting part 15 arranged on the same side of the optical fiber arrangement are set to be axially symmetric, and a plurality of V-shapes are formed at edge of the optical fiber arrangement, and a plurality of X shapes are formed in middle of the optical fiber arrangement. It is designed to enhance the bonding force to the edge optical fiber, and meanwhile, to strengthen the bonding force to optical fiber at a middle position properly. This can effectively prevent the edge optical fiber from loosening, and at the same time, when subjected to an external force, can ensure the strength of the optical fiber ribbon and avoid the middle optical fiber to fall off.

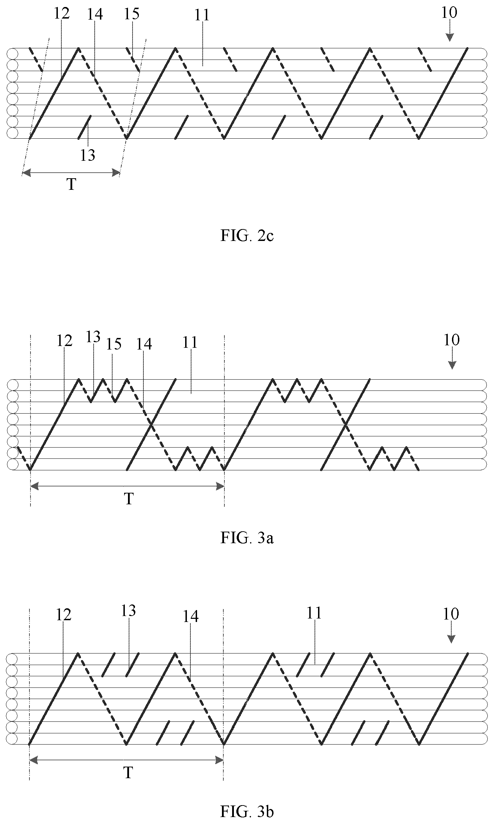

In some embodiments, as shown in FIG. 2c, during a trajectory period of one of the connecting parts, the front arrangement surface of the optical fiber arrangement is provided with one front surface long connecting part 12 and one front surface short connecting parts 13, where the front surface short connecting part 13 is arranged on one side of the optical fiber arrangement, and the front surface long connecting part 12 and the front surface short connecting part 13 are arranged in parallel. The back arrangement surface of the optical fiber arrangement is provided with one back surface long connecting part 14 and one back surface short connecting part 15, the back surface short connecting part 15 is arranged at the edge of the optical fiber arrangement on other side opposite to the front surface short connecting part 13, and the back surface long connecting part 14 and the back surface short connecting part 15 are arranged in parallel. When the front surface connecting part and the back surface connecting part are projected in the same plane, the front surface long connecting part 12 and the back surface long connecting part 14 are set to be axially symmetric, and the front surface long connecting part 12 and the back surface long connecting part 14 from a V-shape at the edge of the optical fiber arrangement. In a continuous period, the long connecting part forms an N shape. It is designed to enhance the bonding force to the edge optical fiber, and thus the looseness of edge optical fiber can be effectively prevented when the optical fiber ribbon is coiled or folded to the back. At the same time, the long connecting part and the short connecting part has a same interval density, so the process is simplified and the production efficiency is improved during manufacturing.

### Embodiment 3

The difference of the structure of the flexible optical fiber ribbon of the present embodiment from Embodiment 2 is that the trajectories of the connecting parts are different, the density of the short connecting part arranged at the edge of the optical fiber arrangement is greater than that of the long connecting part arranged across the optical fibers, and at the same time, the number of the front surface connecting part is more than that of the back surface connecting part.

In the present embodiment, as shown in FIG. 3a, during a trajectory period of one of the connecting parts, the front arrangement surface of the optical fiber arrangement is provided with two front surface long connecting parts 12 and four front surface short connecting parts 13, where two front surface short connecting parts 13 are arranged at the upper-side edge of the optical fiber arrangement, and the other two front surface short connecting parts 13 are arranged at the lower-side edge of the optical fiber arrangement, and the front surface long connecting parts 12 and the front surface short connecting parts 13 are arranged in parallel. The back arrangement surface of the optical fiber arrangement is provided with one back surface long connecting part 14 and four back surface short connecting parts 15, where two back surface short connecting parts 15 are arranged at the upper-side edge of the optical fiber arrangement, and the other two back surface short connecting parts 15 are arranged at the lower-side edge of the optical fiber arrangement, and the back surface long connecting parts 14 and the back surface short connecting parts 15 are arranged in parallel. When the front surface connecting part and the back surface connecting part are projected in the same plane, the front surface long connecting part 12 and the back surface long connecting part 14 are set to be axially symmetric, and the front surface short connecting part 13 and the back surface short connecting parts 15 arranged on the same side of the optical fiber arrangement are set to be axially symmetric. A plurality of V-shapes are formed at the edges of the optical fiber arrangement, and an X shape is formed in the middle of the optical fiber arrangement.

In the present embodiment, it is designed to enhance the bonding force to the edge optical fiber, and thus the looseness of the edge optical fiber can be effectively prevented when the optical fiber ribbon is coiled or folded to the back. At the same time, the number of front surface connecting parts is greater than that of back surface connecting part, which is more easily to coil or fold the optical fiber ribbon to the back, and strengthens the bonding force to the middle optical fiber on the front arrangement surface to improve the stability of the flexible optical fiber ribbon.

In some embodiments, as shown in FIG. 3b, during a trajectory period of one of the connecting parts, the front arrangement surface of the optical fiber arrangement is provided with two front surface long connecting parts 12 and four front surface short connecting parts 13, where two front surface short connecting parts 13 are arranged at the upper-side edge of the optical fiber arrangement, and the other two front surface short connecting parts 13 are arranged at the lower-side edge of the optical fiber arrangement, and the front surface long connecting parts 12 and the front surface short connecting parts 13 are arranged in parallel. The back arrangement surface of the optical fiber arrangement is provided with two back surface long connecting parts 14, and the back surface long connecting parts 14 are also arranged in parallel. When the front surface connecting part and the back surface connecting part are projected in the same plane, the front surface long connecting parts 12 and the back surface long connecting parts 14 are set to be axially symmetric, and the front surface long connecting parts 12 and the back surface long connecting parts 14 are connected head to tail at the edge of the optical fiber arrangement to form a V-shape. In continuous periods, the long connecting parts form an N shape.

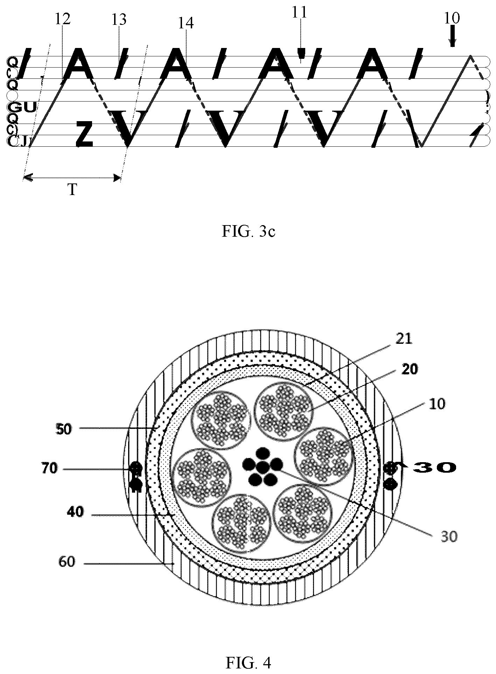

In some embodiments, as shown in FIG. 3c, during a trajectory period of one of the connecting parts, the front arrangement surface of the optical fiber arrangement is provided with one front surface long connecting part 12 and two front surface short connecting parts 13, where one front surface short connecting part 13 is arranged at the upper-side edge of the optical fiber arrangement, and the other front surface short connecting part 13 is arranged at the lower-side edge of the optical fiber arrangement, and the front surface long connecting part 12 and the front surface short connecting parts 13 are arranged in parallel. The back arrangement surface of the optical fiber arrangement is provided with one back surface long connecting part 14. When the front surface connecting part and the back surface connecting part are projected in the same plane, the front surface long connecting part 12 and the back surface long connecting part 14 are set to be axially symmetric, and the front surface long connecting part 12 and the back surface long connecting part 14 are connected head to tail at the edge of the optical fiber arrangement to form a V-shape, and in continuous periods, the long connecting parts form an N shape.

### Embodiment 4

As shown in FIG. 4, the present embodiment provides a ribbon optical cable, which includes an optical fiber bundle unit 20, a sponge wrapping band 40, a loose bushing 50 and an outer sheath 60 arranged sequentially from inside to outside. The optical fiber bundle unit includes a plurality of optical fiber bundles in stranded form and a color wire 21 wrapped around the plurality of optical fiber bundles in stranded form, the optical fiber bundles include a plurality of flexible optical fiber ribbons 10 that are arranged in a coiled form. Spaces between the optical fiber bundle unit 20 and the sponge wrapping band 40 and between the optical fiber bundle units 20 are filled with a water-blocking yarn 30; the optical fiber bundle unit 20 and the water-blocking yarn 30 are longitudinally wrapped by the sponge wrapping band 40; and a plurality of reinforcement members 70 are symmetrically embedded in a wall of the outer sheath 60.

The structure of the flexible optical fiber ribbon 10 is the same as that of the "flexible optical fiber ribbon" described in the above embodiment. The flexible optical fiber ribbon 10 includes a plurality of optical fibers 11 arranged in parallel in a same plane to form an optical fiber arrangement; front surface long connecting parts are arranged at an interval in a longitudinal direction of the front arrangement surface of the optical fiber arrangement, and back surface long connecting parts are arranged at an interval in a longitudinal direction of the back arrangement surface of the optical fiber arrangement; the connecting parts are in a straight line shape with a certain inclined angle and are unevenly distributed on the optical fiber arrangement. The connecting parts of the front arrangement surface and the back arrangement surface use resin materials with different tensile strength and viscosity, and the resin viscosity of the front surface connecting part is higher than that of the back surface connecting part, and the tensile strength of resin of the front surface connecting part is higher than that of resin of the back surface connecting part. When the optical fiber ribbon is coiled or folded to the back, the front surface connecting part 12 has a higher tensile degree and the optical fiber ribbon is more easily to be coiled or folded to the back, to ensure that the optical fiber ribbon is coiled or folded into a predetermined shape, and the connecting parts will not fall off due to excessive tension.

The loose bushing 50 of the ribbon optical cable is made of PBT, so that the loose bushing 50 has better temperature characteristic, tensile strength and stability, and thus the loose bushing 50 has good bending performance and strength.

The outer sheath 60 of the ribbon optical cable, which is a polyethylene sheath or a flame retardant polyethylene material, is not only environmentally friendly but also has good flame retardant performance.

The reinforcement member 70, which is a FRP (Fiber Reinforced Plastic) rod or a KFRP (Kevlar Fiber Reinforced Plastic) rod, has tensile protection, and not only has high strength but also has good processing performance.

Above, the embodiments of the present application are introduced in detail, and specific embodiments are applied to explain the principle and implementation of the present application. The descriptions of the above embodiments are only used to help understand the method and core idea of the present application. At the same time, for those skilled in the art, according to the idea of the present application, there will be changes in the specific mode of implementation and the scope of application. To sum up, the contents of the present specification should not be understood as restrictions on the present application.

## Claims

1. A flexible optical fiber ribbon (10), comprising an optical fiber arrangement formed by a plurality of optical fibers (11) arranged in parallel adjacent to each other in a same plane; and connecting parts are provided at an interval along a length direction of the optical fiber arrangement on a front arrangement surface (A) and a back arrangement surface (B) of the optical fiber arrangement, respectively, wherein the connecting parts are inclined straight shapes and the connecting parts of the front arrangement surface (A) and/or the back arrangement surface (B) are distributed at uneven intervals; materials of the connecting parts are a resin; and a tensile strength of the resin of a front surface connecting part is higher than a tensile strength of the resin of a back surface connecting part, and
**characterized in that**
a viscosity of the resin of the front surface connecting part is higher than a viscosity of the resin of the back surface connecting part.

2. The flexible optical fiber ribbon (10) according to claim 1, wherein a density of the front surface connecting part is greater than a density of the back surface connecting part.

3. The flexible optical fiber ribbon (10) according to claim 1, wherein the connecting parts of the front arrangement surface (A) and/or the back arrangement surface (B) comprise a short connecting part and a long connecting part.

4. The flexible optical fiber ribbon (10) according to claim 3, wherein the short connecting part is arranged at an edge of the optical fiber arrangement surface, and the long connecting part is arranged across and bonding the optical fiber arrangement.

5. The flexible optical fiber ribbon (10) according to claim 4, wherein trajectories of the front surface connecting part and the back surface connecting part are arranged periodically, and have a same arrangement period.

6. The flexible optical fiber ribbon (10) according to claim 5, wherein a long connecting part array and a short connecting part array are comprised in a trajectory period (T) of the connecting parts, and the long connecting part array comprises at least one long connecting part and the short connecting part array comprises at least one short connecting part;
in one trajectory period (T), the short connecting part array on at least one of the front arrangement surface (A) and the back arrangement surface (B) is arranged on both sides of the long connecting part array along the length direction of the optical fiber arrangement, and the short connecting part array is alternately distributed at an upper-side edge (C) of the optical fiber arrangement and at a lower-side edge (D) of the optical fiber arrangement;
in one trajectory period (T), the connecting parts on a same arrangement surface are arranged in parallel, and the connecting parts of the front arrangement surface (A) and the back arrangement surface (B) are inclined in opposite directions.

7. The flexible optical fiber ribbon (10) according to any one of claims 3-6, wherein an arrangement density of the short connecting part on the front arrangement surface (A) and/or the back arrangement surface (B) is greater than an arrangement density of the long connecting part.

8. A flexible optical fiber ribbon (10), comprising an optical fiber arrangement formed by a plurality of optical fibers (11) arranged in parallel adjacent to each other in a same plane; and connecting parts are arranged at an interval along a length direction of the optical fiber arrangement on a front arrangement surface (A) and a back arrangement surface (B) of the optical fiber arrangement, respectively; wherein the connecting parts are inclined straight shapes, materials of the connecting parts are a resin; and a tensile strength of the resin of a front surface connecting part is higher than a tensile strength of the resin of a back surface connecting part;
the connecting parts of the front arrangement surface (A) and/or the back arrangement surface (B) includes a long connecting part array and a short connecting part array, the short connecting part array and the long connecting part array on at least one of the front arrangement surface (A) and the back arrangement surface (B) are alternately arranged along the length direction of the optical fiber arrangement, and
**characterized in that**
a viscosity of the resin of the front surface connecting part is higher than a viscosity of the resin of the back surface connecting part.

9. The flexible optical fiber ribbon (10) according to claim 8, wherein the long connecting part array comprises at least one long connecting part arranged across and bonding the optical fiber arrangement and the short connecting part array comprises at least one short connecting part arranged only at an edge of the optical fiber arrangement surface.

10. The flexible optical fiber ribbon (10) according to claim 8, wherein trajectories of the short connecting part array and the long connecting part array are arranged periodically, and have a same arrangement period, the connecting parts on a same arrangement surface are arranged in parallel in a trajectory period (T), and the connecting parts of the front arrangement surface (A) and the back arrangement surface (B) are inclined in opposite directions.

11. A ribbon optical cable, comprising an optical fiber bundle unit (20), a wrapping band (40), a loose bushing (50) and an outer sheath (60) arranged sequentially from inside to outside, wherein the optical fiber bundle unit (20) comprises a plurality of optical fiber bundles in stranded form and a color wire (21) wrapped around the plurality of optical fiber bundles in stranded form, the optical fiber bundles comprise the flexible optical fiber ribbon (10) according to any one of claims 1-10 arranged in a coiled form;
spaces between the optical fiber bundle unit (20) and the wrapping band (40) and between the optical fiber bundle units (20) are filled with a water-blocking yarn (30); the optical fiber bundle unit (20) and the water-blocking yarn (30) are longitudinally wrapped by the wrapping band (40); and a plurality of reinforcement members (70) are symmetrically embedded in a wall of the outer sheath (60).

## Patentansprüche

1. Flexibles Lichtleitfaserband (10), das eine Lichtleitfaseranordnung umfasst, die durch eine Vielzahl von Lichtleitfasern (11) gebildet wird, die parallel nebeneinander in einer gleichen Ebene angeordnet sind; und wobei Verbindungsteile in einem Abstand entlang einer Längsrichtung der Lichtleitfaseranordnung auf einer vorderen Anordnungsoberfläche (A) bzw. einer hinteren Anordnungsoberfläche (B) der Lichtleitfaseranordnung vorgesehen sind, wobei die Verbindungsteile geneigte gerade Formen sind und die Verbindungsteile der vorderen Anordnungsoberfläche (A) und/oder der hinteren Anordnungsoberfläche (B) in ungleichmäßigen Abständen verteilt sind; die Materialien der Verbindungsteile ein Harz sind; und eine Zugfestigkeit des Harzes eines Verbindungsteils der vorderen Oberfläche höher ist als eine Zugfestigkeit des Harzes eines Verbindungsteils der hinteren Oberfläche und
**dadurch gekennzeichnet, dass**
eine Viskosität des Harzes des vorderen Oberflächenverbindungsteils höher ist als eine Viskosität des Harzes des hinteren Oberflächenverbindungsteils.

2. Flexibles Lichtleitfaserband (10) nach Anspruch 1, wobei eine Dichte des vorderen Oberflächenverbindungsteils größer ist als eine Dichte des hinteren Oberflächenverbindungsteils.

3. Flexibles Lichtleitfaserband (10) nach Anspruch 1, wobei die Verbindungsteile der vorderen Anordnungsoberfläche (A) und/oder der hinteren Anordnungsoberfläche (B) ein kurzes Verbindungsteil und ein langes Verbindungsteil umfassen.

4. Flexibles Lichtleitfaserband (10) nach Anspruch 3, wobei das kurze Verbindungsteil an einer Kante der Lichtleitfaser-Anordnungsoberfläche angeordnet ist, und der lange Verbindungsteil quer zur Lichtleitfaser-Anordnung angeordnet ist und diese verbindet.

5. Flexibles Lichtleitfaserband (10) nach Anspruch 4, wobei die Bahnen des vorderen Oberflächenverbindungsteils und des hinteren Oberflächenverbindungsteils periodisch angeordnet sind und eine gleiche Anordnungsperiode haben.

6. Flexibles Lichtleitfaserband (10) nach Anspruch 5, wobei ein langes Verbindungsteilfeld und ein kurzes Verbindungsteilfeld in einer Bahnperiode (T) der Verbindungsteile enthalten sind, und das lange Verbindungsteilfeld mindestens ein langes Verbindungsteil und das kurze Verbindungsteilfeld mindestens ein kurzes Verbindungsteil umfasst;
wobei in einer Bahnperiode (T) das kurze Verbindungsteilfeld auf mindestens einer der vorderen Anordnungsoberfläche (A) und der hinteren Anordnungsoberfläche (B) auf beiden Seiten des langen Verbindungsteilfeldes entlang der Längsrichtung der Lichtleitfaseranordnung angeordnet ist, und das kurze Verbindungsteilfeld abwechselnd an einer oberseitigen Kante (C) der Lichtleitfaseranordnung und an einer unterseitigen Kante (D) der Lichtleitfaseranordnung verteilt ist;
wobei in einer Bahnperiode (T) die Verbindungsteile auf einer gleichen Anordnungsoberfläche parallel angeordnet sind und die Verbindungsteile der vorderen Anordnungsoberfläche (A) und der hinteren Anordnungsoberfläche (B) in entgegengesetzte Richtungen geneigt sind.

7. Flexibles Lichtleitfaserband (10) nach einem der Ansprüche 3-6, wobei eine Anordnungsdichte des kurzen Verbindungsteils auf der vorderen Anordnungsoberfläche (A) und/oder der hinteren Anordnungsoberfläche (B) größer ist als eine Anordnungsdichte des langen Verbindungsteils.

8. Flexibles Lichtleitfaserband (10), das eine Lichtleitfaseranordnung umfasst, die durch eine Vielzahl von Lichtleitfasern (11) gebildet wird, die parallel nebeneinander in einer gleichen Ebene angeordnet sind; und wobei Verbindungsteile in einem Abstand entlang einer Längsrichtung der Lichtleitfaseranordnung auf einer vorderen Anordnungsoberfläche (A) bzw. einer hinteren Anordnungsoberfläche (B) der Lichtleitfaseranordnung angeordnet sind, wobei die Verbindungsteile geneigte gerade Formen sind, die Materialien der Verbindungsteile ein Harz sind, und eine Zugfestigkeit des Harzes eines Verbindungsteils der vorderen Oberfläche höher ist als eine Zugfestigkeit des Harzes eines Verbindungsteils der hinteren Oberfläche; wobei die Verbindungsteile der vorderen Anordnungsoberfläche (A) und/oder der hinteren Anordnungsoberfläche (B) ein langes Verbindungsteil und ein kurzes Verbindungsteilfeld umfassen, wobei das kurze Verbindungsteilfeld und das lange Verbindungsteilfeld auf mindestens einer der vorderen Anordnungsoberfläche (A) und der hinteren Anordnungsoberfläche (B) abwechselnd entlang der Längsrichtung der Lichtleitfaseranordnung angeordnet sind, und
**dadurch gekennzeichnet, dass**
eine Viskosität des Harzes des vorderen Oberflächenverbindungsteils höher ist als eine Viskosität des Harzes des hinteren Oberflächenverbindungsteils.

9. Flexibles Lichtleitfaserband (10) nach Anspruch 8, wobei das lange Verbindungsteilfeld mindestens ein langes Verbindungsteil umfasst, das quer zur Lichtleitfaseranordnung angeordnet ist und diese verbindet, und das kurze Verbindungsteilfeld mindestens ein kurzes Verbindungsteil umfasst, das nur an einer Kante der Oberfläche der Lichtleitfaseranordnung angeordnet ist.

10. Flexibles Lichtleitfaserband (10) nach Anspruch 8, wobei die Bahnen des kurzen Verbindungsteilfeldes und des langen Verbindungsteilfeldes periodisch angeordnet sind und eine gleiche Anordnungsperiode aufweisen, wobei die Verbindungsteile auf einer gleichen Anordnungsoberfläche in einer Bahnperiode (T) parallel angeordnet sind und die Verbindungsteile der vorderen Anordnungsoberfläche (A) und der hinteren Anordnungsoberfläche (B) in entgegengesetzte Richtungen geneigt sind.

11. Lichtleitflachbandkabel, das eine Lichtleitfaserbündeleinheit (20), ein Umhüllungsband (40), eine lose Hülse (50) und einen Außenmantel (60), die von innen nach außen aufeinanderfolgend angeordnet sind, umfasst, wobei die Lichtleitfaserbündeleinheit (20) eine Vielzahl von Lichtleitfaserbündeln in Litzenform und einen Farbdraht (21) umfasst, der um die Vielzahl von Lichtleitfaserbündeln in Litzenform gewickelt ist, die Lichtleitfaserbündel das flexible Lichtleitfaserband (10) nach einem der Ansprüche 1-10 umfassen, das in einer gewickelten Form angeordnet ist;
Zwischenräume zwischen der Lichtleitfaserbündeleinheit (20) und dem Umhüllungsband (40) sowie zwischen den Lichtleitfaserbündeleinheiten (20) mit einem wasserblockierenden Garn (30) gefüllt sind; die Lichtleitfaserbündeleinheit (20) und das wasserblockierende Garn (30) in Längsrichtung von dem Umhüllungsband (40) umhüllt sind; und eine Vielzahl von Verstärkungselementen (70) symmetrisch in eine Wand des Außenmantels (60) eingebettet ist.

## Revendications

1. Ruban de fibres optiques flexible (10), comprenant un agencement de fibres optiques formé par une pluralité de fibres optiques (11) agencées en parallèle adjacentes les unes aux autres dans un même plan ; et des parties de raccordement sont prévues à un intervalle le long d'une direction de longueur de l'agencement de fibres optiques sur une surface d'agencement avant (A) et une surface d'agencement arrière (B) de l'agencement de fibres optiques, respectivement, dans lequel les parties de raccordement sont des formes droites inclinées et les parties de raccordement de la surface d'agencement avant (A) et/ou de la surface d'agencement arrière (B) sont réparties à intervalles irréguliers ; des matériaux des parties de raccordement sont une résine ; et une résistance à la traction de la résine d'une partie de raccordement de surface avant est plus élevée qu'une résistance à la traction de la résine d'une partie de raccordement de surface arrière, et
**caractérisé en ce que**
une viscosité de la résine de la partie de raccordement de surface avant est plus élevée qu'une viscosité de la résine de la partie de raccordement de surface arrière.

2. Ruban de fibres optiques flexible (10) selon la revendication 1, dans lequel une densité de la partie de raccordement de surface avant est supérieure à une densité de la partie de raccordement de surface arrière.

3. Ruban de fibres optiques flexible (10) selon la revendication 1, dans lequel les parties de raccordement de la surface d'agencement avant (A) et/ou de la surface d'agencement arrière (B) comprennent une partie de raccordement courte et une partie de raccordement longue.

4. Ruban de fibres optiques flexible (10) selon la revendication 3, dans lequel la partie de raccordement courte est agencée au niveau d'un bord de la surface d'agencement de fibres optiques, et la partie de raccordement longue est agencée en travers de l'agencement de fibres optiques et liant celui-ci.

5. Ruban de fibres optiques flexible (10) selon la revendication 4, dans lequel des trajectoires de la partie de raccordement de surface avant et de la partie de raccordement de surface arrière sont agencées périodiquement, et ont une même période d'agencement.

6. Ruban de fibres optiques flexible (10) selon la revendication 5, dans lequel un réseau de parties de raccordement longues et un réseau de parties de raccordement courtes sont compris dans une période de trajectoire (T) des parties de raccordement, et le réseau de parties de raccordement longues comprend au moins une partie de raccordement longue et le réseau de parties de raccordement courtes comprend au moins une partie de raccordement courte ;
dans une période de trajectoire (T), le réseau de parties de raccordement courtes sur au moins l'une parmi la surface d'agencement avant (A) et la surface d'agencement arrière (B) est agencé sur les deux côtés du réseau de parties de raccordement longues le long de la direction de longueur de l'agencement de fibres optiques, et le réseau de parties de raccordement courtes est réparti en alternance au niveau d'un bord de côté supérieur (C) de l'agencement de fibres optiques et au niveau d'un bord de côté inférieur (D) de l'agencement de fibres optiques ;
dans une période de trajectoire (T), les parties de raccordement sur une même surface d'agencement sont agencées en parallèle, et les parties de raccordement de la surface d'agencement avant (A) et de la surface d'agencement arrière (B) sont inclinées dans des directions opposées.

7. Ruban de fibres optiques flexible (10) selon l'une quelconque des revendications 3 à 6, dans lequel une densité d'agencement de la partie de raccordement courte sur la surface d'agencement avant (A) et/ou la surface d'agencement arrière (B) est supérieure à une densité d'agencement de la partie de raccordement longue.

8. Ruban de fibres optiques flexible (10), comprenant un agencement de fibres optiques formé par une pluralité de fibres optiques (11) agencées en parallèle adjacentes les unes aux autres dans un même plan ; et des parties de raccordement sont agencées à un intervalle le long d'une direction de longueur de l'agencement de fibres optiques sur une surface d'agencement avant (A) et une surface d'agencement arrière (B) de l'agencement de fibres optiques, respectivement ; dans lequel les parties de raccordement sont des formes droites inclinées, des matériaux des parties de raccordement sont une résine ; et une résistance à la traction de la résine d'une partie de raccordement de surface avant est plus élevée qu'une résistance à la traction de la résine d'une partie de raccordement de surface arrière ;
les parties de raccordement de la surface d'agencement avant (A) et/ou de la surface d'agencement arrière (B) comportent un réseau de parties de raccordement longues et un réseau de parties de raccordement courtes, le réseau de parties de raccordement courtes et le réseau de parties de raccordement longues sur au moins l'une parmi la surface d'agencement avant (A) et la surface d'agencement arrière (B) sont agencés en alternance le long de la direction de longueur de l'agencement de fibres optiques, et
**caractérisé en ce que**
une viscosité de la résine de la partie de raccordement de surface avant est plus élevée qu'une viscosité de la résine de la partie de raccordement de surface arrière.

9. Ruban de fibres optiques flexible (10) selon la revendication 8, dans lequel le réseau de parties de raccordement longues comprend au moins une partie de raccordement longue agencée en travers de l'agencement de fibres optiques et liant celui-ci et le réseau de parties de raccordement courtes comprend au moins une partie de raccordement courte agencée uniquement au niveau d'un bord de la surface d'agencement de fibres optiques.

10. Ruban de fibres optiques flexible (10) selon la revendication 8, dans lequel des trajectoires du réseau de parties de raccordement courtes et du réseau de parties de raccordement longues sont agencées périodiquement, et ont une même période d'agencement, les parties de raccordement sur une même surface d'agencement sont agencées en parallèle dans une période de trajectoire (T), et les parties de raccordement de la surface d'agencement avant (A) et de la surface d'agencement arrière (B) sont inclinées dans des directions opposées.

11. Câble optique en ruban, comprenant une unité de faisceaux de fibres optiques (20), un bandeau d'enveloppement (40), un dé lâche (50) et une gaine externe (60) agencés en séquence de l'intérieur à l'extérieur, dans lequel l'unité de faisceaux de fibres optiques (20) comprend une pluralité de faisceaux de fibres optiques sous forme câblée et un fil de couleur (21) enveloppé autour de la pluralité de faisceaux de fibres optiques sous forme câblée, les faisceaux de fibres optiques comprennent le ruban de fibres optiques flexible (10) selon l'une quelconque des revendications 1 à 10 agencé sous forme spiralée ;
des espaces entre l'unité de faisceaux de fibres optiques (20) et le bandeau d'enveloppement (40) et entre les unités de faisceaux de fibres optiques (20) sont comblés avec un filin bloquant l'eau (30) ; l'unité de faisceaux de fibres optiques (20) et le filin bloquant l'eau (30) sont enveloppés longitudinalement par le bandeau d'enveloppement (40) ; et une pluralité d'organes de renfort (70) sont noyés symétriquement dans une paroi de la gaine externe (60).
